# EUROPÄISCHE PATENTSCHRIFT

(11) **EP 0 431 077 B1**
(45) Veröffentlichungstag und Bekanntmachung des Hinweises auf die Patenterteilung: **20.10.1993**
(21) Anmeldenummer: 89910822.9
(22) Anmeldetag: 27.09.1989
(51) Int. Cl.: F23G 5/027

(54) **VERFAHREN UND VORRICHTUNG ZUR THERMISCHEN BEHANDLUNG VON VERGASUNGSGUT**
PROCESS AND DEVICE FOR THE HEAT TREATMENT OF GASIFIED MATERIAL
PROCEDE ET DISPOSITIF POUR LE TRAITEMENT THERMIQUE DE PRODUITS DE GAZEIFICATION

(30) Priorität: 07.06.1989 DE 3918508
(43) Veröffentlichungstag der Anmeldung: 12.06.1991
(73) Patentinhaber: C. Deilmann AG, D-48455 Bad Bentheim (DE)
(72) Erfinder: GRUMPELT, Heinrich, D-4444 Bad Bentheim (DE); HINRICHS, Heinz, D-2992 Dörpen (DE); HOHENBERGER, Ludger, D-4460 Nordhorn (DE); WILLMANN, Karl-Heinz, D-2908 Friesoythe-Neuscharrel (DE)
(74) Vertreter: Bockermann, Rolf, Dipl.-Ing.
(86) Internationale Anmeldenummer: DE8900607
(87) Internationale Veröffentlichungsnummer: WO9015287

(56) Entgegenhaltungen:
- EP-A- 0 124 827
- WO-A-85/01096
- CH-A- 360 152
- DE-A- 1 955 035
- DE-A- 1 965 935
- DE-A- 3 543 424
- GB-B- 1 206 338

## Beschreibung

Die Erfindung betrifft einerseits ein Verfahren zur thermischen Behandlung von Vergasungsgut gemäß den Merkmalen im Oberbegriff des Patentanspruchs 1.

Andererseits richtet sich die Erfindung auf eine Vorrichtung zur thermischen Behandlung von Vergasungsgut gemäß den Merkmalen im Oberbegriff des Patentanspruchs 3.

Ein derartiges Verfahren und eine solche Vorrichtung zählen durch die DE-PS 35 43 424 zum Stand der Technik. Hierbei wird die vollständige Umwandlung des beim Vergasungsprozeß erzeugten Prozeßgases in ein ausgebranntes geruchloses Rauchgas in einem weitgehend geradlinig angeordneten keramischen Flammenkanal durchgeführt. Der Flammenkanal erstreckt sich zwischen einem Festbettvergaser mit vertikalem Reaktorraum und einem Heizkessel einer Heizungsanlage zur Erzeugung von Heiz- und/oder Prozeßwärme.

Die Crackung der im Prozeßgas enthaltenen hochmolekularen teerigen und öligen Bestandteile bei Temperaturen von 950 °C und höher zu nicht mehr kondensierbaren niedermolekularen Verbindungen, in der Hauptsache Gase, sowie die Oxidation dieser Verbindungen zu dem am Ende des Flammenkanals gewünschten ausgebrannten geruchlosen Rauchgas mit Temperaturen um bzw. über 1000 °C ist u.a. abhängig von der chemischen Zusammensetzung und der Beschaffenheit des Vergasungsguts sowie besonders bei fossilen Brennstoffen und deren Derivaten auch von deren Entstehung und Alter.

Je älter beispielsweise ein fossiler Brennstoff als Vergasungsgut oder je komplexer die Zusammensetzung eines Vergasungsguts ist, desto problematischer sind die Schwierigkeiten bei der Umwandlung der Vergasungsprodukte des Vergasungsguts.

Hierbei spielt insbesondere die Verweilzeit des Prozeßgases im Flammenkanal eine wesentliche Rolle. Diese wird bestimmt durch die Komplexität der hochmolekularen Verbindungen im Prozeßgas und die Kompliziertheit ihrer Umwandlung in niedermolekulare Verbindungen. Folglich müßte in Abhängigkeit von der Zusammensetzung der Prozeßgase die Länge des Flammenkanals entsprechend anpaßbar sein. Eine beliebige Längenveränderung des bekannten nahezu geradlinigen Flammenkanals ist aber z.B. im Hinblick auf die sich damit stellenden Probleme bezüglich der zur Verfügung stehenden Räumlichkeiten nicht ohne weiteres möglich oder sinnvoll.

Im bekannten Fall hat die sich im wesentlichen geradlinig erstreckende Anordnung des Flammenkanals zwischen dem Festbettvergaser und dem Heizkessel bei quer bzw. tangential eingeführter Sekundärluft ausgereicht, um Prozeßgase aus vegetabilischen Vergasungsgütern, wie z.B. Hölzern, einwandfrei in Rauchgase umzuwandeln. Extrem problematisches Vergasungsgut, wie beispielsweise Tierkot oder Ölschlamm, konnte jedoch aufgrund der geschilderten Probleme bei einem geradlinigen Flammenkanal nicht ausreichend auf wirtschaftliche Art und Weise umgewandelt werden.

Der Erfindung liegt die Aufgabe zugrunde, sowohl das im Oberbegriff des Patentanspruchs 1 vorausgesetzte Verfahren als auch die im Oberbegriff des Patentanspruchs 3 beschriebene Vorrichtung hinsichtlich der Verfahrensflexibilität und der Erweiterung der Akzeptanz von insbesondere problematischem Vergasungsgut zu verbessern sowie neben einer mit einfachen Mitteln automatisierbaren Prozeßtechnik eine von der Beschaffenheit des Vergasungsguts unabhängige Fahrweise des Reaktors bei sicherer Beherrschung der stoffartbedingten Emissionsentwicklung zu gewährleisten.

Was den verfahrenstechnischen Teil dieser Aufgabe anlangt, so besteht dessen Lösung in den im Kennzeichen des Patentanspruchs 1 aufgeführten Merkmalen.

Danach wird das Vergasungsgut auf dem Weg von der Aufgabestelle bis zu den Verbrennungs- bzw. Schlackenzonen so gezielt in einem geneigt angeordneten Reaktor innerhalb einer vergleichsweise dünnen Schüttschicht abwärts verlagert, daß sich mehrmals aufeinanderfolgend in einer stationären Phase, also bei ruhendem Vergasungsgut, eine Reaktionszonenstruktur aufbauen kann, wie sie sich üblicherweise in einem reinen Gegenstromvergaser bildet, welche dann anschließend in einer Vorschubphase wieder zerstört und umgeschichtet wird.

Während der Umschichtung wird die zuvor gebildete Reaktionszonenstruktur des Vergasungsguts aufgerissen bzw. gelockert und dabei das vermischte Vergasungsgut sich selbst überrollend bzw. überschlagend weiter in Längsrichtung des Reaktorraums transportiert. Im Anschluß an diese Vorschubphase kommt es dann in einer weiteren stationären Phase zu einer neuen Strukturbildung von bei der Gegenstromvergasung üblichen Reaktionszonen. Das taktweise (absatz- bzw. zonenweise) und auch zeitlich mit Abstand aufeinanderfolgende Aufreißen der Reaktionszonenstrukturen, das Verlagern des Vergasungsguts von einer stationären Phase zur nächsten stationären Phase unter Überrollen und Überschlagen des Vergasungsguts bei gleichzeitiger Vermischung der Reaktionszonen fördert die angestrebte Koksbildung sowie die Vergasung des Kokses in der jeweiligen Reduktionszone bei gleichzeitiger Zunahme der Dicke der Oxidationszone und unter modifizierter Vergasungsmittelzugabe ansteigenden Temperaturen. Das Vergasungsmittel wird hierbei in im wesentlich gleich großen Teilmengen zwar im Querstrom eingeführt, durchdringt die Reaktionszonen des Vergasungsguts, insbesondere während der stationären Phasen, dann aber im Gegenstrom aufwärts.

Das taktweise Verlagern und Umschichten des Vergasungsguts sowie die Neubildung einer Reaktionszonenstruktur in einer stationären Phase, jedoch in ständig geringer werdender Dicke der Schüttschicht hat in vorteilhafter Weise zur Folge, daß an keiner Stelle des Reaktorraums selbst äußerst problematisches Vergasungsgut mit niedrigem Ascheschmelzpunkt an den Wandungen des Reaktorraums anbacken, versintern, verkleben oder in sich selbst zu großen Schlackebrocken koagulieren kann. Es wird während der Verlagerungsphasen immer wieder aufgerissen, aufgelockert und zerbrochen, bevor den Vergasungsverlauf störende Vorgänge durchgreifend wirksam werden. Folglich nimmt das gesamte Vergasungsgut an jeder Stelle im Reaktorraum an den parallel ablaufenden chemischen Umsetzungen während des Vergasungsprozesses teil.

Auf diese Weise ist nach einer materialabhängig vorgegebenen Anzahl von abwechselnd aufeinanderfolgenden stationären Phasen und Vorschubphasen am unteren Ende des Reaktorraums das Vergasungsgut vollständig in einen inerten Rückstand sowie in klares Prozeßgas umgesetzt.

Das Vergasungsmittel, das insbesondere aus Luftsauerstoff besteht, aber auch aus mit Sauerstoff angereicherter Luft oder Luft-Wasserdampf- bzw. Sauerstoff-Wasserdampf-Gemischen oder anderen Sauerstoffträgern bestehen kann, wird derart gezielt den einzelnen Längenabschnitten des Reaktorraums zugeführt, daß bis in den Bereich der Verbrennungs- und Schlackenzonen stets nahezu gleiche Mengen an Vergasungsmittel zugeführt werden. Lediglich im Bereich der unten liegenden Verbrennungs- und Schlackenzone wied eine demgegenüber größere Teilmenge an Vergasungsmittel eingeleitet, damit hier mit Sicherheit ausreichend hohe Temperaturen erzeugt werden, um u.a. die für eine heizwertreiche Prozeßgaserzeugung günstigsten Boudouard'schen Vergasungsbedingungen sicherzustellen. Eine derartige Vorgehensweise ist deshalb wichtig, um möglichst hohe Brennwerte im Prozeßgas zu erreichen, d.h. das zwangsläufig in der Oxidationszone überwiegend entstehende CO₂ mit dem überwiegend in der Reduktionszone am Koks entstehenden CO im Reaktorraum bei möglichst hohen Temperaturen zu vermengen und so das Boudouard'sche Gleichgewicht in Richtung eines größeren CO-Überschusses zu verschieben.

Das erfindungsgemäße Verfahren stellt sicher, daß in jedem hinter der Aufgabestelle des Reaktorraums gelegenen Abschnitt, an dem das Vergasungsgut an den thermischen Umsetzungen des ablaufenden Vergasungsprozesses teilnimmt, die Oxidationszone bei gleichbleibenden Vergasungsbedingungen immer dicker im Vergleich zu der abnehmenden und schließlich ganz verschwindenden Dicke der Trocknungs-, Schwel- und Reduktionszonen wird. Am unteren Ende des sich geneigt erstreckenden Reaktorraums sind schließlich nur noch die Oxidationszone sowie die Schlackenzone und die Zone der kühlenden Asche vorhanden.

Während der taktweisen (absatz- bzw. stufenweisen) Abwärtsbewegung des Vergasungsguts werden in den höher liegenden Bereichen des Reaktorraums beim Durchtritt des Vergasungsmittels durch das Vergasungsgut, also bei noch geringen Temperaturen Schwelgase erzeugt, die in den Reaktorraum oberhalb des Vergasungsguts eintreten. Gleichzeitig werden in einem geringen Umfang auch Feststoffpartikel aus dem Vergasungsgut mit in diesen Raum hineingerissen. Je tiefer das Vergasungsgut dann zwangsweise im Reaktorraum abwärtsbewegt wird, desto mehr verschiebt sich die Erzeugung von überwiegend Schwelgas in überwiegend Reduktionsgas und schließlich in CO₂ in der Oxidationszone. Alle vorgenannten Gase und hier im einzelnen nicht näher definierte weitere Reaktionsgase vermischen sich dann in dem oberhalb der Vergasungsgutschüttung befindlichen Raum, wo Temperaturen bis über 1000 °C erreicht werden, die zu der vorstehend bereits erwähnten Verschiebung des Boudouard'schen Gleichgewichts in Richtung CO führen.

Variable Taktzeiten und/oder Taktabstände erlauben es nicht nur, die Verweildauer des Vergasungsguts in den stationären Phasen materialabhängig exakt bestimmen zu können, sondern gestatten es auch, die Verlagerungsgeschwindigkeit, d.h. also den Entmischungsvorgang einer zuvor während einer stationären Phase aufgebauten Reaktionszone definiert, ggf. programmiert, zu steuern. Die Verlagerungsgeschwindigkeit des Vergasungsguts kann extern gesteuert werden.

Das im Reaktor entstehende Prozeßgas wird in einen labyrinthartigen Flammenkanal überführt. Ein derartiger Aufbau erlaubt es, auf kleinstem Raum einen ausreichend langen Flammenkanal bereitzustellen, bei welchem neben den reaktionskinetisch günstigen Turbulenzen die Verweilzeit von Prozeßgasen mit selbst komplexen hochmolekularen Verbindungen so gezielt steuerbar ist, daß ihre teerigen und öligen Bestandteile stufenweise durch Cracken in niedermolekulare Verbindungen umgewandelt und ihre vollständige Oxidation in ein ausgebranntes geruchloses Rauchgas gewährleistet werden kann.

Die auf diese Weise erzeugten Rauchgase gelangen aus dem Labyrinth-Flammenkanal in einen Abhitzekessel, insbesondere einen Dreizugabhitzekessel, in welchem die bei der Verbrennung und Inertisierung der Rauchgase anfallende Wärme wirkungsvoll und weitgehend energetisch genutzt werden kann.

Ein weiterer Vorteil des erfindungsgemäßen Verfahrens liegt darin, daß auch auf extrem hohe Schadstoffkonzentrationen im Vergasungsgut, wodurch unter Umständen zulässige Emissionswerte überschritten werden könnten, gezielt reagiert werden kann. So wird im oder nach dem Abhitzekessel ein hochreaktives Trockenadsorptionsmittel, beispielsweise in Form eines hochreaktiven pulverförmigen Kalkhydratprodukts, dosiert in den Rauchgasstrom mittels dafür geeigneter Dosier- und Reaktionsgefäße bzw. -einrichtungen eingegeben. Diese Sekundär-Entschwefelungs- bzw. -entchlorungsmaßnahme ist bezüglich der Stelle, wo das Trockenadsorptionsmittel eingegeben wird, von der Temperatur des erzeugten Rauchgases abhängig, bei welcher z.B. prozeßtechnisch sowie reaktionskinetisch der größtmögliche SO₂- bzw. HCl- oder andere Halogenemissionssenkungseffekte erreicht werden und sich unter anderem zugleich auch der geringstmögliche Aufwand für die als Folge der Trockenadsorption durchzuführende Nachentstaubung der Rauchgase ergibt.

Die Entstaubung der Rauchgase hinter dem Abhitzekessel kann mit Hilfe von Kerzen-, Schlauch- oder Schüttfiltern durchgeführt werden. Hierbei handelt es sich um Filtersysteme, bei denen nicht nur eine problemlose, das heißt betriebssichere Entstaubung und regelmäßige Abreinigung gewährleistet ist, sondern auch zugleich der Nachentschwefelungs- bzw. Nachentchlorungseffekt mit Hilfe des eingetragenen, aber noch nicht ausreagierten bzw. stofflich unveränderten Trockenadsorptionsmittels im sogenannten Filterkuchen ausgenutzt werden kann.

Durch eine überstöchiometrische Zugabe eines Trockenadsorptionsmittels könnte die Staubbeladung der Rauchgase ggf. auf unzulässig hohe Werte steigen. Daher ist es zur Einhaltung der zulässigen Emissionswerte zweckmäßig, eine Rauchgasentstaubung bei Temperaturen um 200 °C durch Auswahl entsprechender Sonderfiltermaterialien und Konstruktionen zu gewährleisten.

Dank der Erfindung ist es jetzt möglich, nicht nur problematisches Vergasungsgut, wie z.B. Hähnchenkot, und ein großes Spektrum betrieblicher Reststoffe bzw. Abfälle, wie z.B. unvorbehandelte Ölschlämme und/oder ölkontaminierte Böden oder dergleichen, energetisch zu verwerten, sondern diese Stoffe nun auch in loser Form durch mehrstufige thermische Behandlung mit integrierter Primär- und Sekundärbehandlung von Schwefel und Halogenen auf trockenem Wege vollständig in Wärmeenergie, z.B. für die Rohölaufbereitung, umweltverträgliche inerte Rauchgase und in eine inerte rieselfähige Prozeßasche umzuwandeln. Hierbei kann die anfallende Prozeßasche problemlos auf normalen Hausmülldeponien abgelagert werden. Ferner kann sie als Baumaterial verwertet werden.

Eine weitere vorteilhafte Ausführungsform des erfindungsgemäßen Verfahrens besteht in den Merkmalen des Patentanspruchs 2.

Durch die Mischung des ölkontaminierten Vergasungsguts mit kohlenstoffhaltigen Zuschlagstoffen, mit hochreaktiven Trockenadsorptionsmitteln und Filterstaub sowie mit Prozeßasche, insbesondere in einem hierfür geeigneten Zwangsmischer, können jetzt alle vorher nicht bzw. nur sehr schwer handhabbaren, weil zähen, klebrigen, zähflüssigen, stichfesten oder klumpigen Ölschlämme und/oder Ölböden zunächst dosierbar und danach sicher verarbeitungsfähig gemacht werden. Das erdig-krümelige Mischprodukt erfährt hierbei eine solche Vergleichmäßigung und Auflockerung, daß seine Stapelung und Zwischenlagerung bzw. Aufhäufung - auch in Silos bzw. in großer Schütthöhe - problemlos möglich ist. Es muß also nicht befürchtet werden, daß das Mischprodukt wieder verdichtet, verklumpt oder verklebt. Eine derart gezielte Vorbehandlung stellt darüberhinaus sicher, daß während der thermischen Behandlung das Mischprodukt stets luft- bzw. gasdurchlässig bleibt und demzufolge während der Vergasung geregelten, d.h. planmäßig allen zu durchlaufenden Reaktionen kontrollierter unterzogen werden kann.

Als kohlenstoffhaltige Zuschlagstoffe eignen sich besonders hochthermoreaktive Biomassen. Hierzu zählen beispielsweise aschearme organische Reststoffe, wie Säge-, Fräs- und Hobelspäne sowie Hackschnitzel und Rinde von feiner bis mittlerer Körnung. Aber auch erdalkalireiche Reststoffe aus der Nahrungsmittelproduktion, wie z.B. Kakao- oder Erdnußschalen, sind als Zuschlagstoffe geeignet. Selbstverständlich können auch Kokse zur Mindest-C_{fix}-Einstellung eingesetzt werden.

Die benötigte Menge des Zuschlagstoffs kann je nach Art, Beschaffenheit und Zusammensetzung des zu behandelnden ölkontaminierten Vergasungsguts in weiten Grenzen variieren. Allerdings ist ein niedriger Wassergehalt des Zuschlagstoffs ebenso von Vorteil wie eine möglicherweise vorhandene hohe Alkalität desselben.

Das Untermischen von Trockenadsorptionsmitteln zu dem Vergasungsgut sowie zu den kohlenstoffhaltigen Zuschlagstoffen dient der Einbindung von vorhandenen, entstehenden oder sich umbildenden, rohstoffgebundenen, gelösten oder gasförmigen Schadstoffen, insbesondere Schwefel- und Chlorverbindungen, an der Quelle ihres Auftretens. Es kann sich z.B. um Kalk bzw. Kalkhydratprodukte oder entsprechend andere emissionssenkende Produkte, beispielsweise Dolomit, handeln. Die benötigte Menge des Trockenadsorptionsmittels wird dabei in erster Linie durch den Gehalt an Schwefel und Halogenverbindungen in den ölkontaminierten Stoffen bestimmt.

Als besonderer Vorteil im Rahmen dieser erfindungsgemäßen Ausführungsform können jetzt die bei der Vergasung anfallenden Filterstäube und die Prozeßasche zu dem ölkontaminierten Vergasungsgut gemischt werden. Durch die Verwendung des Filterstaubs als Primärzuschlagstoff kann frisches Trockenadditiv eingespart werden, da der Filterstaub eine hierfür genügend hohe Alkalität aufweist. Durch die hohen pH-Werte des Filterstaubs und der Prozeßasche kann desweiteren eine erhebliche Senkung des Ascheschmelzpunkts gewährleistet werden. Die die Verschlackung fördernde Schmelzpunkterniedrigung ergibt sich dabei im wesentlichen durch die Zugabe des Trockenadsorptionsmittels, beispielsweise in Form von Kalkhydraten und Dolomit, ohne daß die kritische Dissoziationstemperaturen und -bedingungen für die aus den basischen Feststoffen Schwefel und anderen Halogenen bei der Trockenadsorption entstandenen neuen Verbindungen erreicht werden.

Der bei der Entstaubung des Rauchgases abgeschiedene Staub enthält große Mengen von noch nicht umgesetztem Adsorptionsmittel. Dadurch hat es sich als verfahrenstechnisch sehr vorteilhaft und zugleich kostensparend erwiesen, die Filterabgänge als Primärentschwefelungszusatzstoff für das Mischprodukt einzusetzen. Diese Vorgehensweise hat zum einen den Vorteil, daß bei der Beseitigung von ölkontaminiertem Vergasungsgut, wie beispielsweise Ölschlämme und/oder ölkontaminierte Böden, neben der Prozeßasche kein weiterer Rest- oder Abfallstoff produziert wird und zum anderen, daß das nicht umgesetzte Adsorptionsmittel beim Mischprodukt für die Einbindung von gasförmigen Schadstoffen an der Quelle ihrer Entstehung genutzt werden kann. Hierdurch können die Betriebskosten der thermischen Mehrstufenbehandlung von ölkontaminiertem Vergasungsgut nochmals im positiven Sinne beeinflußt werden.

Das dem Mischprodukt zuzusetzende Trockenadsorptionsmittel sollte vorteilhaft auf ein Kornspektrum von erheblich kleiner als 1/100 mm feinstaufgemahlen werden.

Ferner ist es von Vorteil, wenn bei der Verwendung eines Schüttfilters ein granulatförmiges Trockenadsorptionsmittel als Schüttgut eingesetzt wird. Hierdurch kann die Rauchgasreinigung noch effektiver gestaltet werden, d.h. der Entstaubungs- und Nachentschwefelungs- bzw. Nachentchlorungseffekt kann noch besser ausgenutzt werden.

Die Lösung des gegenständlichen Teils der der Erfindung zugrundeliegenden Aufgabe wird in den kennzeichnenden Merkmalen des Patentanspruchs 3 gesehen.

Die Neigung des Reaktorraums gegenüber der Horizontalen erfolgt, um das Vergasungsgut von der einfüllschachtseitigen Aufgabestelle aus in einer vergleichsweise dünnen Schüttschicht taktweise in Richtung der unteren Aschezone mechanisch und schwerkraftabhängig bewegen zu können. Der Neigungsgrad wird vom Vergasungsgut bestimmt. Bei Bedarf kann der Reaktorraum auch neigungsveränderbar ausgebildet sein. Die Veränderung kann stufenweise oder stufenlos durchgeführt werden.

Die Aufteilung des Reaktorbodens in ortsfeste Abschnitte und zu diesen relativbewegliche Abschnitte erlaubt es einerseits, das Vergasungsgut während der Abwärtsbewegung in Abhängigkeit von seiner Zusammensetzung entsprechend mehrfach im Ruhezustand zu belassen, so daß sich die üblicherweise bei der Gegenstromvergasung einstellenden Reaktionszonen ausbilden können und gestattet es andererseits, zum Anbacken, Versintern oder Verkleben neigendes Vergasungsgut ständig aufzulockern und die Strukturen der Reaktionszonen wieder zu vermischen.

Die durch Schieber gebildeten beweglichen Abschnitte des Reaktorbodens können für sich oder auch gemeinsam im vorbestimmten Takt der stationären Phasen und der Vorschubphasen bewegt werden. Die Geschwindigkeit kann gleichförmig oder ungleichförmig sein. Auch kann die Geschwindigkeit der im Abstand übereinander angeordneten Abschnitte voneinander abweichen. Auf jeden Fall wird jedoch sichergestellt, daß das Vergasungsgut in den Vorschubphasen immer wieder aufgerissen, umgeschichtet (umgewälzt) und aufgelockert wird, so daß sich in den stationären Phasen neue Reaktionszonenstrukturen bilden können mit dem Ziel einer Zunahme der Oxidationszone und einer stetigen Verringerung der Trocknungs-, Schwel- und Reduktionszonen.

Die festen Abschnitte des Reaktorbodens sind zweckmäßig durch stufenweise, im Abstand übereinander angeordnete Roste gebildet. Die Roste erstrecken sich hierbei vorzugsweise jeweils in einer horizontalen Ebene.

Die Zuführung des Vergasungsmittels erfolgt im Bereich der beweglichen Abschnitte im Querstrom. Anschließend durchdringt das Vergasungsmittel die Schüttung des Vergasungsguts jedoch im Gegenstrom aufwärts. Die Teilmengen Vergasungsmittel in jedem beweglichen Abschnitt sind im wesentlichen gleich groß. Demgegenüber ist die im Bereich der Verbrennungs- und Schlackenzone zusätzlich vertikal zugeführte Teilmenge Vergasungsmittel größer, um in diesem Bereich die für eine heizwertreiche Prozeßgaserzeugung günstigsten Boudouard'schen Vergasungsbedingungen mit Temperaturen bis über 1000 °C sicherzustellen. Die Zuführung des Vergasungsmittels kann in beliebiger Weise vorgenommen werden. Bevorzugt liegen die Zuführungen jedoch seitlich bzw. über und unter den beweglichen Schiebern.

Der insbesondere horizontale Gasabzugsstutzen liegt im heißesten Bereich des Reaktorraums, um die hier sich während des Vergasungsprozesses ansammelnden und mischenden Reaktionsgase abführen zu können und um ein Absinken der Temperatur des Prozeßgases zu vermeiden. Der Gasabzugsstutzen kann mit ggf. regelbaren Öffnungen versehen sein. Regelbare Öffnungen können beispielsweise der Zufuhr von Sekundärluft dienen. Andere Öffnungen können auch als Meß- und/oder Kontrollstellen eingerichtet sein.

Die Vorrichtung gemäß der Erfindung erlaubt es, nicht nur stückiges und festes Vergasungsgut, sondern insbesondere auch erweichendes und zum Teigigwerden neigendes Vergasungsgut bei gleichmäßiger Durchgasung der Schüttung einsetzen zu können. Dabei wird die spezifische Durchsatzleistung des Reaktors bei gleichzeitiger Anhebung der Austrittstemperatur des Prozeßgases aufgrund Erhöhung der Vergasungsgeschwindigkeit heraufgesetzt. Ferner werden kontrollierte Vergasungsbedingungen durch Übergang von einer für die Gegenstromvergasung typischen hohen und schwer zu durchgasenden Materialsäule auf eine Querstrom-Gegenstrom-Vergasung sichergestellt in zum Teil nur wenige Zentimeter betragenden niedrigen Reaktionszonen. Der Kohlenstoffumsetzungsgrad und der Vergaserwirkungsgrad werden heraufgesetzt, und zwar unabhängig davon, ob es sich um sortierte oder unsortierte Massen beliebiger Körnung erdiger, klebriger, faseriger, plattiger, teigiger, erweichender oder feuchter Vergasungsmaterialien wechselnder Zusammensetzung handelt.

Die obere keramische Wand des Reaktorraums ist bevorzugt querbeweglich vorgesehen, um den Querschnitt des Reaktorraums in Abhängigkeit von der Zusammensetzung des Vergasungsguts sowie der sich einstellenden Vergasungsbedingungen dahingehend verändern zu können, daß dadurch die vom Vergasungsgut abgegebene Wärme optimal auf dasselbe zurückgestrahlt wird.

Ein Schichthöhenregler am einfüllschachtseitigen Ende der oberen Wand kann verhindern, daß frisch aufgegebenes Vergasungsgut ungehindert und in nicht definierter Menge in den unteren Bereich des Reaktorraums gleiten und u.a. unkontrollierte Vergasungsreaktionen ebenso herbeiführen kann wie eine unerwünschte unvollständige Umsetzung des eingesetzten Vergasungsguts. Diese ist beispielsweise bei Einsatz der Vorrichtung zur umweltfreundlichen Beseitigung von Abfällen und insbesondere auch bei der Altlastsanierung in hohem Maße unerwünscht.

Alle beweglichen und unbeweglichen Wand- bzw. Bodenabschnitte des Reaktorraums mit Ausnahme der oberen Keramikwand sind wassergekühlt. Eine solche Wasserkühlung erlaubt es, mit hohen Temperaturen zu fahren, ohne daß befürchtet werden muß, daß das Vergasungsgut an den Wänden des Reaktorraums anbackt.

Die Aufgliederung des Flammenkanals in eine Vielzahl von kurzen Längenabschnitten und deren Relativzuordnung in triaxialer Konfiguration erlaubt es, auch auf kleinstem Raum einen ausreichend langen Flammenkanal bereitzustellen, bei welchem die Verweilzeit von Prozeßgasen mit selbst komplexen hochmolekularen Verbindungen so gezielt steuerbar ist, daß ihre teerigen und öligen Bestandteile stufenweise durch Cracken in niedermolekulare Verbindungen umgewandelt und ihre vollständige Oxidation in ausgebranntes geruchloses Rauchgas gewährleistet werden kann.

Der vielfach gewundene labyrinthartige, durch eine sich kreuzende, umschlingende, windende, auf- und absteigende, also ständig seine Richtung wechselnde Führung erzeugte Verlauf des Flammenkanals stellt auf der einen Seite die vergasungsgutabhängige notwendige Verveilzeit des Prozeßgases sicher und erlaubt auf der anderen Seite eine optimale turbulente und vollständige Durchmischung des umzuwandelnden Prozeßgases mit Sekundärluft. Ein weiterer Vorteil des labyrinthartigen Verlaufs des Flammenkanals wird darin gesehen, daß auch kurzfristig sich bildende laminare Strömungen unmittelbar nach ihrer Entstehung sofort wieder aufgerissen und in Turbulenzen umgewandelt werden. Hierdurch wird der Vorteil erreicht, mit erheblich höheren Strömungsgeschwindigkeiten fahren zu können, als dies im bekannten Fall möglich war, ohne hierbei aber die Qualität des Ausbrands zu senken.

Insbesondere erlaubt es die Erfindung, daß im Zuge der verschärften Bestimmungen in Sachen Umweltschutz unter Einhaltung der jeweiligen Vorschriften auch die Prozeßgase aus extrem problematischem Vergasungsgut nach gezielter Hochtemperaturaufcrackung ihrer hochmolekularen Verbindungen zuverlässig in ein stets ausgebranntes geruchloses und schadstoffarmes Rauchgas umgewandelt werden.

Die Länge des Flammenkanals kann stets relativ problemlos auf die Beschaffenheit des jeweiligen Vergasungsguts abgestellt werden. Dabei kann insbesondere auch der Art der Entstehung sowie dem Alter fossiler Brennstoffe und deren Derivate gezielt Rechnung getragen werden.

Durch eine den einzelnen Längenabschnitten stufen- und/oder zonenweise zugeführte Sekundärluft kann diese in Abhängigkeit von dem jeweiligen Prozeßgas und dessen Zusammensetzung sowie dessen Verbrennungsverhalten gezielt turbulent und vollständig mit dem Prozeßgas vermischt werden.

Nach Patentanspruch 4 können die Längenabschnitte Bestandteile von vorwiegend ähnlich gestalteten und/oder gegeneinander austauschbaren Modulkörpern bilden. Derartige Modulkörper sind dann in Abhängigkeit von der Komplexität des umzuwandelnden Prozeßgases bausteinartig aneinandersetzbar. Hierbei können auf kleinstem Aufstellungsraum unterschiedlich lange Flammenkanäle anwenderseitig problemlos zusammengestellt und bei Bedarf auch wieder zu einer anderen Konfiguration ausgetauscht werden.

Bei den Modulkörpern kann es sich um Fertigsegmente aus form- und/oder gießbaren keramischen Massen handeln. Auch eine Zusammensetzung in Ziegelbauweise ist vorstellbar.

Denkbar ist nach Patentanspruch 5 aber auch eine Bauart, gemäß welcher die Längenabschnitte in einem monolytischen Gußblock augebildet sind.

Eine weitere Ausführungsform des erfindungsgemäßen Grundgedankens besteht in den Merkmalen des Patentanspruchs 6.

Die Erfindung ist nachfolgend anhand von in den Zeichnungen dargestellten Ausführungsbeispielen näher erläutert. Es zeigen:
- Figur 1: in schematischer perspektivischer Darstellung ein Mehrstufenverbrennungssystem;
- Figur 2: im Schema in vergrößerter Darstellung einen Schrägbettreaktor für das Verbrennungssystem der Figur 1;
- Figur 3: einen für das Verbrennungssystem der Figur 1 geeigneten labyrinthartigen Flammenkanal in Modulbauweise und
- Figur 4: ebenfalls in der Perspektive, teilweise im Schnitt, einen einzelnen Modulkörper.

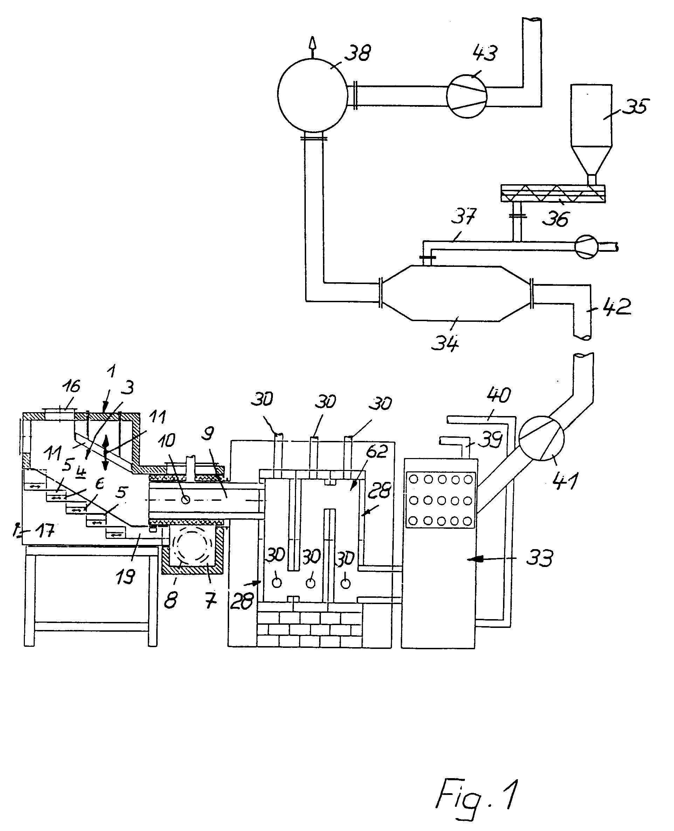

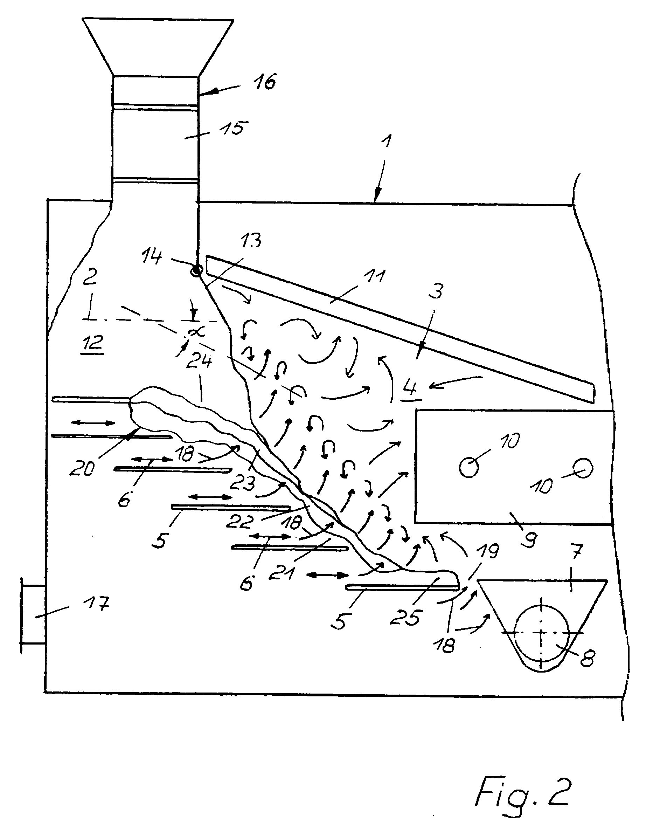

Wie die Figuren 1 und 2 bei gemeinsamer Betrachtung erkennen lassen, ist in einem Reaktor 1 ein zur Horizontalen 2 unter einem Winkel α geneigter Reaktorraum 3 angeordnet, der seitlich von vertikalen Wänden 4 begrenzt wird. Der Boden des Reaktorraums 3 besteht aus stufenweise mit Abstand übereinander angeordneten ortsfesten horizontalen Rosten 5, zwischen denen querbewegliche Schieber 6 angeordnet sind. Die Schieber 6 können gemeinsam oder getrennt mit ggf. voneinander abweichenden stetigen oder unstetigen Geschwindigkeiten bewegt werden. Roste 5 und Schieber 6 sind wassergekühlt.

In Längsrichtung des Reaktorraums 3 gesehen ist hinter dem untersten Rost 5, jedoch mit dessen Oberseite in etwa gleicher Höhe liegend ein Ascheaustrag 7 mit einer Austragsschnecke 8 angeordnet.

Im Abstand oberhalb des untersten Rosts 5 sowie des Ascheaustrags 7 erstreckt sich in den Reaktorraum 3 hinein ein rohrförmiger Gasabzugsstutzen 9 mit, insbesondere regelbaren, Öffnungen 10 für Sekundärluft. Andere in den Zeichnungen nicht näher dargestellte Öffnungen 10 können aber auch als Meß- und/oder Kontrollstellen eingerichtet sein.

Die obere Wand 11 des Reaktorraums 3 ist als keramisches Gewölbe quer zu den Rosten 5 bewegbar angeordnet, um den Querschnitt des Reaktorraums 3 in Abhängigkeit von dem jeweils zu vergasenden Gut 12 sowie den sich einstellenden Vergasungsbedingungen verändern zu können.

Am oberen Ende der Wand 11 ist ein Schichthöhenregler 13 um eine horizontale Achse 14 schwenkbar aufgehängt. Dieser Schichthöhenregler 13 verhindert, daß über den mit einer Schleuse 15 versehenen Einfüllschacht 16 frisch aufgegebenes Vergasungsgut 12 ungehindert und in nicht definierter Menge in den unteren Bereich des Reaktorraums 3 abgleiten kann.

Stirnseitig des Reaktors 1 ist die Einspeisung 17 für das Vergasungsmittel 18, wie insbesondere Luftsauerstoff, vorgesehen. Das Vergasungsmittel 18 gelangt in gezielter Querstromführung in nahezu gleichen Teilmengen im Bereich der Schieber 6 in den Reaktorraum 3 und zusätzlich im Gegenstrom über den Abstand 19 zwischen dem untersten Rost 5 und dem Ascheaustrag 7 in einer demgegenüber größeren Teilmenge vertikal in den Reaktorraum 3.

Das über den Einfüllschacht 16 aufgegebene Vergasungsgut 12 erstreckt sich in einer in der Höhe in Längsrichtung des Reaktorraums 3 abnehmenden Schüttschicht 20. Hierbei bilden sich während mehrerer im zeitlichen Abstand aufeinanderfolgender stationärer Phasen, also in quasi ruhendem Zustand des Vergasungsguts 12, die bei üblicher Gegenstromvergasung entstehenden Reaktionszonen 21-24 aus. Zwischen die stationären Phasen sind Vorschubphasen integriert, in welchen das Vergasungsgut 12 durch die Schieber 6 mechanisch und schwerkraftabhängig in Längsrichtung des Reaktorraums 3 verlagert wird. Bei dieser Verlagerung werden die sich in den stationären Phasen ausbildenden Strukturen der Reaktionszonen 21-24 aufgelockert, aufgerissen und umgeschichtet. Hierdurch wird verhindert, daß auch zum Versintern, Anbacken oder Verkleben neigendes problematisches Vergasungsgut 12 sich örtlich festsetzen kann. Das gesamte Vergasungsgut 12 nimmt an jeder Stelle im Reaktorraum 3 an den parallel ablaufenden chemischen Umsetzungen während des Vergasungsprozesses teil.

Aufgrund dieser Verfahrensweise wird die angestrebte Koksbildung bei gleichzeitiger Vergasung des Kokses in der Reduktionszone 22 gefördert. Dabei nimmt die Dicke der Oxidationszone 21 in Längsrichtung des Reaktorraums 3 ständig zu, während die Trocknungszone 24, die Schwelzone 23 und die Reduktionszone 22 dünner werden und schließlich ganz verschwinden. Am unteren Ende des Reaktorraums 3 ist dann nur noch die Oxidationszone 21 sowie die Schlackenzone 25 und die Schicht der kühlenden Asche vorhanden.

Aufgrund des Sachverhalts, daß im Bereich 19 des Reaktorraums 3 im Gegenstrom eine größere Menge an Vergasungsmittel 18 eingeleitet wird als in den Bereichen der Schieber 6, können hier die angestrebten hohen Temperaturen bis über 1000 °C erzeugt werden, um u.a. die für eine heizwertreiche Prozeßgaserzeugung günstigsten Boudouard'schen Vergasungsbedingungen sicherzustellen. Dabei wird das zwangsläufig in der Oxidationszone 21 überwiegend am Koks entstehende CO₂ mit dem überwiegend in der Reduktionszone 22 entstehenden CO im Reaktorraum 3 oberhalb der Schüttschicht 20 bei möglichst hohen Temperaturen vermengt und so das Boudouard'sche Gleichgewicht in Richtung eines größeren CO-Überschusses verschoben.

Das bei der Vergasung anfallende Prozeßgas wird über den Gasabzugsstutzen 9 in einen labyrinthartigen Flammenkanal 62 zur vollständigen Umwandlung in ausgebranntes geruchloses Rauchgas überführt (siehe Figuren 1, 3 und 4).

Der Flammenkanal 62 ist in kurze Längenabschnitte 26, 27 aufgegliedert, welche in triaxialer Konfiguration aneinandergesetzt sind. Der Richtungsverlauf des Flammenkanals 62 ist mit Pfeilen definiert.

Die Längenabschnitte 26, 27 sind in blockförmigen Modulkörpern 28 als Längskanäle und als an einem Ende der Längskanäle diese schneidende Querkanäle ausgebildet.

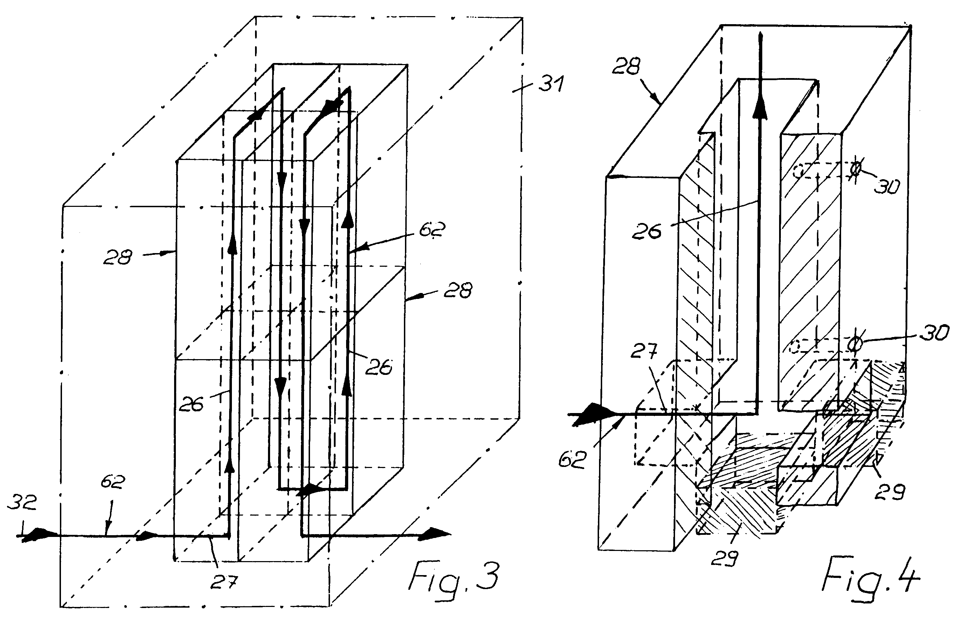

In der Figur 4 ist ein solcher aus einer gießbaren keramischen Masse hergestellter Modulkörper 28 näher veranschaulicht. Es ist zu erkennen, daß je nach Verwendungszweck die Längskanäle 26 und Querkanäle 27 endseitig durch Stopfen oder Deckplatten 29 verschlossen werden können. Der Kanalquerschnitt ist beliebig. Beim Ausführungsbeispiel ist er eckig.

Außerdem ist in der Figur 4 angedeutet, daß den einzelnen Längenabschnitten 26, 27 sowie den Stopfen und/oder Deckplatten 29 Sekundärluftzuführungen 30 zugeordnet sind, die in nicht näher veranschaulichter Weise regelbar sind.

Desweiteren läßt die Figur 3 noch erkennen, daß die den Flammenkanal 62 bildenden Modulkörper 28 von einem wärmeisolierenden Mantel 31 umgeben sein können.

Je nach Komplexität des in den Flammenkanal 62 bei 32 eingeführten Prozeßgases kann dieses nun durch eine bestimmte Zuordnung der Modulkörper 28 labyrinthartig auf einem langen Weg geführt werden, wobei es durch gezielte Zuführung der Sekundärluft möglich ist, das Prozeßgas und die Sekundärluft turbulent und vollständig durchzumischen. Wo die Sekundärluft zugegeben wird und in welcher Menge ist abhängig von der Zusammensetzung des jeweiligen Prozeßgases und dessen Verbrennungsverhalten. Die Verweilzeit des Prozeßgases im Flammenkanal 62 zur Umwandlung in vollständig ausgebranntes geruchloses und schadstoffarmes Rauchgas kann durch entsprechende Zuordnung von Modulkörpern 28 exakt vorbestimmt und variiert werden.

Im Bereich des Dreizugabhitzekessels 33 werden bei 34 Trockenadsorptionsmittel aus einem Bunker 35, beispielsweise in Form von hochreaktivem Kalkhydrat, in Pulverform mittels Zuteilung 36 und Einblassystem 37 dosiert in das Rauchgas eingegeben. Hiermit sollen den Schadstoffkonzentrationen in dem jeweils in den Reaktor 3 eingegebenen Vergasungsgut 12 im Hinblick auf die zulässigen Emissionswerte Rechnung getragen werden.

Hinter der als Mischer ausgebildeten Eingabestelle 34 für das Trockenadsorptionsmittel ist ein Rauchgasfilter 38, beispielsweise in Form eines Schüttfilters, vorgesehen. Bei diesem Rauchgasfilter 38 wird als Schüttgut ein Trockenadsorptionsmittel in Granulatform verwendet. Hiermit kann die Rauchgasreinigung noch effektiver im Sinne einer besseren Ausnutzung des Entstaubungs- und Nachentschwefelungs- bzw. Nachentchlorungseffekts durchgeführt werden.

Mit 39 ist der Vorlauf und mit 40 der Rücklauf für den Dreizugabhitzekessel 33 bezeichnet. 41 ist ein in die Abzugsleitung 42 integriertes Rauchzuggebläse, das zur Stabilisierung der Druckverhältnisse durch ein zweites integriertes Rauchzuggebläse 43 hinter dem Rauchgasfilter 38 unterstützt wird.

Das in den Reaktor 1 eingegebene Vergasungsgut 12 ist insbesondere erdig-krümelig und wird dadurch erzeugt, daß ölkontaminierte Stoffe diverser Zusammensetzung, wie Ölschlämme oder ölkontaminierte Böden, in unvorbehandeltem Zustand mit kohlenstoffhaltigen Zuschlagstoffen, mit hochreaktiven Trockenadsorptionsmitteln, Filterstaub und mit Prozeßasche gemischt und dispergiert werden. Dabei ist es vorteilhaft, wenn die bei der Vergasung anfallende Prozeßasche den ölkontaminierten Stoffen zugemischt wird. Ferner können als Primärentschwefelungszuschlagstoff die Filterabgänge den ölkontaminierten Stoffen zugesetzt werden, weil diese große Mengen von noch nicht umgesetzten Adsorptionsmitteln enthalten.

### Bezugszeichenaufstellung

- 1 -: Reaktor
- 2 -: Horizontale
- 3 -: Reaktorraum
- 4 -: Seitenwände
- 5 -: Roste
- 6 -: Schieber
- 7 -: Ascheaustrag
- 8 -: Austragsschnecke
- 9 -: Gasabzugsstutzen
- 10 -: Öffnungen
- 11 -: obere Wand
- 12 -: Vergasungsgut
- 13 -: Schichthöhenregler
- 14 -: Achse
- 15 -: Schleuse
- 16 -: Einfüllschacht
- 17 -: Einspeisung
- 18 -: Vergasungsmittel
- 19 -: Abstand
- 20 -: Schüttschicht
- 21 -: Oxidationszone
- 22 -: Reduktionszone
- 23 -: Schwelzone
- 24 -: Trocknungszone
- 25 -: Schlackenzone
- 26 -: Längenabschnitt
- 27 -: Längenabschnitt
- 28 -: Modulkörper
- 29 -: Stopfen
- 30 -: Luftzuführungen
- 31 -: Mantel
- 32 -: Gaseinführung
- 33 -: Dreizugabhitzekessel
- 34 -: Eingabestelle
- 35 -: Bunker
- 36 -: Zuteilung
- 37 -: Einblassystem
- 38 -: Rauchgasfilter
- 39 -: Vorlauf
- 40 -: Rücklauf
- 41 -: Rauchabzuggebläse
- 42 -: Abzugsleitung
- 43 -: Rauchabzuggebläse
- 62 -: Flammenkanal
- α -: Neigungswinkel v. 3

## Patentansprüche

1. Verfahren zur thermischen Behandlung von Vergasungsgut (12), bei welchem das Vergasungsgut (12) in einem schachtartigen Reaktor (1) mit bodenseitiger Luftzuführung (18) und unterer Ascheentnahme (7) in Prozeßgas sowie Prozeßasche umgesetzt wird, worauf das im Bereich der heißesten Reaktorzonen abgezogene Prozeßgas in einem nachgeschalteten Flammenkanal (62) in Rauchgas umgewandelt und dieses anschließend der Wärmeverwertung zugeführt wird, **dadurch gekennzeichnet**, daß unter Einhaltung von abwechselnd aufeinanderfolgenden stationären Phasen und Vorschubphasen das Vergasungsgut (12) in einer geneigt verlaufenden, in ihrer Dicke in Längsrichtung des Reaktors (1) abnehmenden Schüttschicht (20) taktweise schwerkraftabhängig in Längsrichtung des Reaktors (1) verlagert und das Vergasungsmittel (18) über die Länge des Reaktors (1) verteilt in im wesentlichen gleichen Teilmengen im Querstrom und Gegenstrom der Schüttschicht (20) zugeführt wird, während im Bereich (19) der unten liegenden Oxidationszone (21) und Schlackenzone (25) eine im Vergleich zu einer im Querstrom zugeführten Teilmenge Vergasungsmittel (18) größere Teilmenge Vergasungsmittel (18) im Gegenstrom in den Reaktor (1) eingeleitet wird, wobei die sich während einer stationären Phase bei dann im Gegenstrom aufwärts geführtem Vergasungsmittel (18) unter weitgehend gleichbleibend gesteuerten Vergasungsbedingungen, jedoch ständiger Dickenzunahme der Oxidationszone (21) und stetiger Abnahme der Dicke der Trocknungszone (24), der Schwelzone (23) und der Reduktionszone (22) schichtweise bildenden örtlichen Reaktionszonen in der Vorschubphase wieder zerstört bzw. umgeschichtet und die während sowie nach diesem Vermischungsvorgang in den neu gebildeten Reaktionszonen entstehenden Reaktionsgase im Reaktor (1) oberhalb der Schüttschicht (20) zum Prozeßgas vermischt werden, und daß anschließend das Prozeßgas in einem labyrinthartigen Flammenkanal (62) unter stufenweise Luftzufuhr entsprechend dem vorgesehenen Temperaturprofil kontrolliert gecrackt und vollständig in ein schadstoffarmes Rauchgas umgewandelt wird, worauf das Rauchgas einem Abhitzekessel (33) zugeführt und in oder nach diesem mit einem hochreaktiven Trockenadsorptionsmittel dosiert versetzt wird, und daß dann letztlich das so behandelte Rauchgas hinter dem Abhitzekessel (33) bei Temperaturen um 200 °C entstaubt wird.

2. Verfahren nach Patentanspruch 1, zur thermischen Behandlung von durch Öl kontaminiertem Vergasungsgut, **dadurch gekennzeichnet**, daß das durch Öl kontaminierte Vergasungsgut (12) in unvorbehandeltem Zustand zusätzlich mit einem kohlenstoffhaltigen Zuschlagstoff, mit hochreaktiven Trockenadsorptionsmitteln, Filterstaub und Prozeßasche zu einem erdig-krümeligen Mischprodukt gemischt und dispergiert wird, welches dann zumindest diskontinuierlich in den Reaktor (1) eingegeben und bei Temperaturen unter 1200 °C vollständig in Prozeßgas sowie ausgebrannte rieselfähige Prozeßasche umgewandelt wird.

3. Vorrichtung zur thermischen Behandlung von Vergasungsgut (12) in einem schachtartigen Reaktor (1) mit zumindest diskontinuierlicher kopfseitiger Beschickung des Reaktors (1) mit dem Vergasungsgut (12), mit bodenseitiger Zuführung des Vergasungsmittels, unterer Ascheentnahme sowie Abzug des Prozeßgases im Bereich oberhalb der heißesten Reaktionszonen, wobei zwischen dem Reaktor (1) und einem Abhitzekessel (33) ein keramischer Flammenkanal (62) mit Sekundärluftzuführung eingegliedert ist, **gekennzeichnet durch** folgende Merkmale:
a) Der Reaktorraum (3) ist unter einem Winkel (α) zur Horizontalen (2) geneigt angeordnet;
b) der das Vergasungsgut (12) tragende Reaktorboden (5, 6) ist abwechselnd in mehrere ortsfeste Abschnitte (5) und zwischen diese eingegliederte, quer zum Vergasungsgut (12) bewegliche Abschnitte (6) unterteilt;
c) im Bereich der beweglichen Abschnitte (6) sind im wesentlichen horizontal gerichtete Zuführungen und im Bereich der unteren Ascheentnahme (7) zusätzlich vertikal gerichtete Zuführungen (19) für das Vergasungsgut (18) vorgesehen;
d) ein Gasabzugsstutzen (9) erstreckt sich oberhalb der Oxidationszone (21) und Schlackenzone (25) in den Bereich des Reaktorraums (3) mit den heißesten Reaktorzonen;
e) der Flammenkanal (62) ist aus mehreren in triaxialer Konfiguration aneinandersetzbaren kurzen Längenabschnitten (26, 27) gebildet.

4. Vorrichtung nach Patentanspruch 3, **dadurch gekennzeichnet**, daß die Längenabschnitte (26, 27) Bestandteile von vorwiegend ähnlich gestalteten und/oder gegeneinander austauschbaren Modulkörpern (28) bilden.

5. Vorrichtung nach Patentanspruch 3, **dadurch gekennzeichnet**, daß die Längenabschnitte (26, 27) in einem monolytischen Gußblock ausgebildet sind.

6. Vorrichtung nach einem der Patentansprüche 3 bis 5, **dadurch gekennzeichnet**, daß die Längenabschnitte (26, 27) bzw. Modulkörper (28) aus kleinteiligen keramischen Körpern zusammengesetzt sind.

## Claims

1. A method of heat-treatment of material (12) for gasification, the material (12) being converted into process gas and process ash in a shaft-like reactor (1) to which air is supplied (18) at the bottom and from which ash (7) is removed from the bottom, the process gas, which is withdrawn in the neighbourhood of the hottest reactor zones, being converted in a downstream flame duct (62) into flue gas, which is subsequently supplied for use in heating, characterised in that the material (12) for gasification, in alternate successive stationary phases and advance phases, is moved intermittently, in dependence on gravity and in the longitudinal direction of the reactor (1), in a sloping layer (12) of bulk material decreasing in thickness in the longitudinal direction of the reactor (1), and the gasifying agent (18), distributed along the reactor (1), is supplied in substantially equal part-quantities in cross-current and counter-current to the layer (20) of bulk material, and in the region (19) of the bottom oxidation zone (21) and slag zone (25), a part-quantity of gasifying agent (18) greater than the part-quantity (18) thereof supplied in cross-current is introduced in counter-current into the reactor (1), and the gasifying agent (18), which is then conveyed upwards in counter-current during a stationary phase, under substantially uniformly controlled gasification conditions but with continuous increase in the oxidation zone (21) and continuous decrease in the thickness of the drying zone (24), the low-temperature zone (23) and the reduction zone (22) forming layers constituting local reaction zones, is re-destroyed or re-arranged in layers in the advance phase and the reaction gases produced during or after this mixing process in the newly-formed reaction zones in the reactor (1) are mixed above the layer (20) of bulk material to form process gas, after which the process gas is cracked under controlled conditions in a labyrinth-like flame duct (62) in a stepwise supply of air corresponding to the planned temperature profile, after which the flue gas is supplied to a waste-heat boiler (33) and mixed therein or thereafter with metered proportions of a highly reactive dry adsorption agent, and finally the thus-treated flue gas is de-dusted at temperatures around 200°C behind the waste-heat boiler (33).

2. A method according to claim 1 for heat-treatment of oil-contaminated material for gasification, characterised in that the oil-contaminated material (12) for gasification, without pretreatment, is additionally mixed and dispersed in a carbonaceous additive and with highly reactive dry adsorption agents, filter dust and process ash to form an earthy crumbly mixed product, which is then discontinuously or otherwise introduced into the reactor (1) and converted at temperatures below 1200°C completely into process gas and to fully-burnt pourable process ash.

3. A device for heat-treatment of material (12) for gasification in a shaft-like reactor (1), the material (12) for gasification being supplied discontinuously or otherwise to the top of the reactor (1), gasification agent being supplied from the bottom and ash being removed from the bottom and the process gas being removed in the region above the hottest zones of the reactor, a ceramic flame duct (62) with a secondary air supply being incorporated between the reactor (1) and the waste heat boiler (33), characterised by the following features:
a) the reactor chamber (3) is disposed at an angle (α) to the horizontal (2);
b) the reactor tray (5, 6) bearing the material (12) for gasification is divided into a number of stationary portions (5) alternating with interposed portions (6) movable transversely to the material (12) for gasification;
c) substantially horizontal pipes for supplying material (18) for gasification are provided in the region of the movable portions (6) and additional vertical pipes (19) for supplying the material (18) are provided in the region (7) where ash is withdrawn at the bottom;
d) a gas-withdrawal nozzle (9) extends above the oxidation zone (21) and the slag zone (25) into the region of the reactor chamber (3) containing the hottest reactor zones, and
e) the flame duct (62) is made up of a number of short longitudinal portions (26, 27) which can be fitted together in a triaxial configuration.

4. A device according to claim 3, characterised in that the longitudinal portions (26, 27) are components of substantially similar and/or interchangeable modular members (28).

5. A device according to claim 3, characterised in that the longitudinal portions (26, 27) are formed in a monolithic cast block.

6. A device according to any of claims 3 to 5, characterised in that the longitudinal portions (26, 27) or modular members (28) are made up of small ceramic members.

## Revendications

1. Procédé pour le traitement thermique d'un produit de gazéification (12), dans lequel le produit de gazéification (12) est transformé, dans un réacteur en forme de puits (1) avec une amenée d'air (18) par le fond et un prélèvement inférieur de cendres (7), en gaz de processus industriel ainsi qu'en cendres de processus industriel, après quoi, le gaz de processus industriel prélevé au niveau des zones du réacteur les plus chaudes est transformé en gaz de fumée dans un canal de flammes (62) implanté en aval et celui-ci est amené consécutivement à la récupération thermique, caractérisé en ce que tout en maintenant des phases stationnaires et des phases mobiles en alternance, le produit de gazéification (12) est déplacé dans un lit tassé (20) s'étendant de façon inclinée, et dont l'épaisseur diminue dans la direction longitudinale du réacteur (1), en pas-à-pas, sous l'effet de la gravité, dans la direction longitudinale du réacteur (1) et le produit de gazéification (18) est amené de façon répartie sur la longueur du réacteur (1) en quantité partielle sensiblement égale dans le courant transversal et dans le contre-courant du lit tassé (20), tandis qu'au niveau (19) de la zone d'oxydation (21) située dans la partie inférieure et de la zone de laitier (25) est introduit en contre-courant dans le réacteur (1) en une quantité partielle plus importante que la quantité partielle amenée dans le courant transversal, ce en quoi les agents de gazéification (18) amenés pendant une phase stationnaire en contre-courant de façon ascendante dans sensiblement les mêmes conditions de gazéification, mais toutefois en augmentant de façon constante l'épaisseur de la zone d'oxydation (21) et en diminuant de façon constante l'épaisseur de la zone de séchage (24), de la zone de distillation lente (23) et de la zone de réduction (22) formant des zones réactionnelles locales par couches sont de nouveau détruits ou reformés en couche dans la phase d'avance et les gaz réactionnels se produisant pendant ou après ce processus de mélange dans les zones réactionnelles nouvellement formées sont mélangés au-dessus du lit tassé (20) en gaz de processus et en ce que consécutivement le gaz de processus est craqué de façon contrôlée dans un canal de flammes (62) en forme de labyrinthe sous amenée d'air progressive selon une allure de température prévue et sont complètement transformés en un gaz de fumée inoffensif, après quoi le gaz de fumée est amené à une chaudière de réchauffement (33) et dans celle-ci ou après celle-ci, il est mis en réaction de façon dosée avec un agent d'adsorption sec fortement réactif et en ce que pour finir le gaz de fumée ainsi traité est dépoussiéré derrière la chaudière de réchauffage (33) à des températures de 200°C.

2. Procédé selon la revendication 1, destiné au traitement thermique de produit de gazéification contaminé par l'huile, caractérisé en ce que le produit de gazéification (12) contaminé par l'huile est mélangé à l'état non préparé avec un additif contenant du carbone, avec des agents d'adsorption secs fortement réactifs, de la poussière de filtre et des cendres de processus pour donner un produit de mélange terreux-grumeleux et mis en dispersion, lequel produit est ensuite introduit de façon discontinue dans le réacteur (1) et il est transformé à des températures inférieures à 1200°C complètement en gaz de processus ainsi qu'en cendres de processus coulantes et brûlées.

3. Dispositif pour le traitement thermique de produit de gazéification (12) dans un réacteur en forme de puits (1) avec au moins l'alimentation discontinue sur le côté de la tête du réacteur (1) avec le produit de gazéification (12), avec l'amenée par le fond de l'agent de gazéification, le prélèvement des cendres par le dessous ainsi que l'extraction du gaz de processus dans la région au-dessus des zones réactionnelles les plus chaudes, ce en quoi entre le réacteur (1) et une chaudière de réchauffement (33) est incorporé un canal de flammes en céramique (62) avec une amenée d'air secondaire, caractérisé par les particularités suivantes :
a) la chambre du réacteur (3) est agencée de façon inclinée sous un angle (α) par rapport à l'horizontal (2) ;
b) le fond du réacteur (5, 6) portant le produit de gazéification (12) est réparti de façon alternée en plusieurs sections à demeure (5) et entre celles-ci sont réparties des sections mobiles transversalement au produit de gazéification (12) ;
c) dans la région des sections mobiles (6) sont prévues des amenées dirigées essentiellement de façon horizontale et dans la zone de prélèvement inférieure des cendres (7) sont de plus prévues des amenées (19) dirigées verticalement pour les agents de gazéification (18) ;
d) une tubulure d'extraction de gaz (9) s'étend au-dessus de la zone d'oxydation (2) et de la zone de laitier (25) dans la région de la chambre du réacteur (3) avec les zones de réacteur les plus chaudes ;
e) le canal de flammes (62) est formé de plusieurs sections longitudinales (26, 27) courtes juxtaposables en configuration triaxiale.

4. Dispositif selon la revendication 3, caractérisé en ce que les sections longitudinales (26, 27) forment des composants de corps modulaires (28) interchangeables et/ou de forme de façon prédominante analogue.

5. Dispositif selon la revendication 3, caractérisé en ce que les sections longitudinales (26, 27) sont formées à partir d'un bloc de coulée monolithique.

6. Dispositif selon l'une des revendications 3 à 5, caractérisé en ce que les sections longitudinales (26, 27) ou les corps modulaires (28) sont composés de corps céramiques finement divisés.
